# EUROPEAN PATENT SPECIFICATION

(11) **EP 3 501 784 B1**
(45) Date of publication and mention of the grant of the patent: **03.05.2023**
(21) Application number: 18212503.9
(22) Date of filing: 14.12.2018
(51) Int. Cl.: B29C 48/285, B29C 48/62, B29C 48/59, B29C 31/08, B29C 45/18, B29B 7/60, B29B 7/74

(54) **METHOD FOR SUPPLYING MATERIAL TO EXTRUDER**
VERFAHREN ZUR BEREITSTELLUNG VON MATERIAL AN EINEN EXTRUDER
PROCÉDÉ DE FOURNITURE DE MATÉRIAU À UNE EXTRUDEUSE

(30) Priority: 20.12.2017 JP 2017244327
(43) Date of publication of application: 26.06.2019
(73) Proprietor: Sumitomo Rubber Industries, Ltd., Kobe-shi, Hyogo-ken 651-0072 (JP)
(72) Inventor: HONDA, Shinichiro, Kobe-shi, Hyogo 651-0072 (JP); KAWAMURA, Takanobu, Kobe-shi, Hyogo 651-0072 (JP); OKAMOTO, Jun, Kobe-shi, Hyogo 651-0072 (JP)
(74) Representative: Manitz Finsterwald Patent- und Rechtsanwaltspartnerschaft mbB

(56) References cited:
- JP-A- 2003 205 529
- JP-A- 2004 148 766
- JP-A- 2004 359 046
- JP-U- H0 565 517
- JP-U- S61 192 820
- KR-A- 20070 112 922

## Description

### BACKGROUND OF THE INVENTION

### Field of the Invention

The present invention relates to a method for supplying a material to a material feeding port of an extruder.

### Description of the Background Art

Conventionally, extruders provided with a screw for extruding a plastic material that contains rubber have been known. For example, Japanese Laid-Open Patent Publication No. 2014-124826 has proposed an extruder into which a long ribbon rubber is supplied and from which the ribbon rubber is extruded by a screw. In the extruder of Japanese Laid-Open Patent Publication No. 2014-124826, a hopper connected to a rubber supply port has a guide member attached thereto such that excessive supply of the ribbon rubber is suppressed, whereby occurrence of breakage of the ribbon rubber is reduced.

JP S61 192820 U1 and JP 2004 148766 A disclose methods with the features of the preamble of claim 1.

### SUMMARY OF THE INVENTION

However, in the case of the method for supplying a material to the extruder according to Japanese Laid-Open Patent Publication No. 2014-124826, if the material is a material that is less likely to be plasticized, pre-heating (hereinafter, referred to as "warming") by heat resulting from the material being kneaded becomes insufficient in some cases. Meanwhile, with this material supplying method, if the material is a material that is easily plasticized, warming becomes excessive in some cases.

If the warming of the material is insufficient, material break and the like could occur in a preformed product extruded from the extruder. If warming of the material is excessive, the material is scorched, and the quality of the preformed product could change. Thus, the method for supplying a material to the extruder according to Japanese Laid-Open Patent Publication No. 2014-124826 is desired to be further improved in order to perform stable extrusion molding of the material.

The present invention has been made in consideration of the above circumstances. A main object of the present invention is to provide a method for supplying a material to an extruder, the method allowing stable extrusion molding of the material.

The present invention is directed to a method for supplying a plastic material that contains rubber, to a material feeding port of an extruder provided with a screw which extrudes the material. The method includes supplying the material, shaped into a band having a width A, to the material feeding port. The width A of the material is 50% to 150% of a flight width of the screw. The material has a rectangular cross-section, and a thickness B of the material is not less than 50% of a net flight depth of the screw.

In the method for supplying the material to the extruder according to the present invention, preferably, the width A of the material is 90% to 110% of the flight width.

In the method for supplying the material to the extruder according to the present invention, preferably, the thickness B of the material is not greater than 120% of the net flight depth.

In the method for supplying the material to the extruder according to the present invention, preferably, a cross-sectional area of the material is 90% to 110% of a net flight cross-sectional area of the screw.

In the method for supplying the material to the extruder according to the present invention, preferably, the material has a Mooney viscosity ML1+4 (100°C) of not less than 90.

In the method for supplying the material to the extruder according to the present invention, the width A of the material is 50% to 150% of the flight width of the screw. According to this method for supplying the material to the extruder, the ratio between the width of the material and the flight width is specified although a focus has not been placed on the ratio, and thus, it is possible to cause the material to be smoothly loaded into the screw and it is possible to allow appropriate (i.e., neither excessive nor insufficient) warming of the material to be performed. Therefore, the method for supplying the material of the present invention allows stable extrusion molding of the material to be performed.

### BRIEF DESCRIPTION OF THE DRAWINGS

FIG. 1 is a partial cross-sectional view showing one embodiment of an extruder of the present invention;
FIG. 2 is a cross-sectional view along the line X-X in FIG. 1;
FIG. 3 is a partial cross-sectional view showing an extruder of another embodiment; and
FIG. 4 is a cross-sectional view along the line Y-Y in FIG. 3.

### DESCRIPTION OF THE PREFERRED EMBODIMENTS

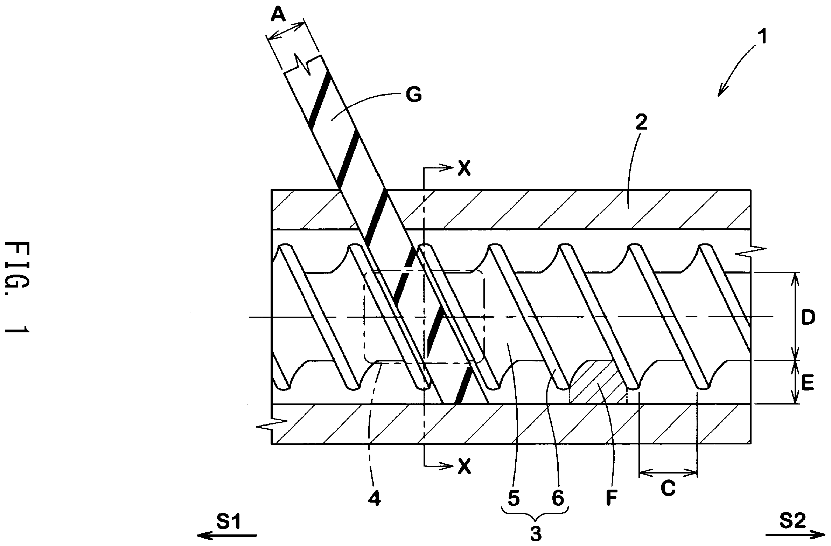

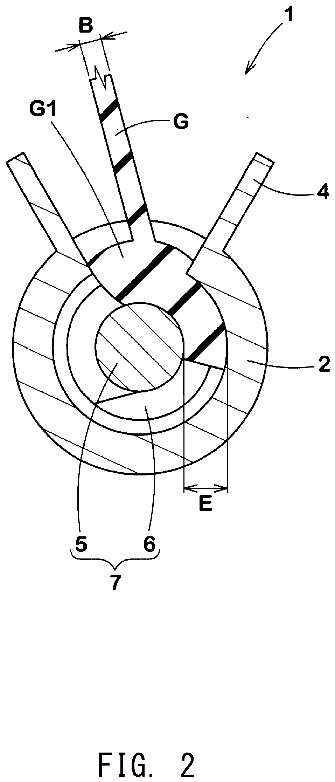

Hereinafter, an embodiment of the present invention is described in detail with reference to the drawings. FIG. 1 is a partial cross-sectional view showing an extruder 1 to be used in a method for supplying a material to the extruder 1 according to the present embodiment. FIG. 2 is a cross-sectional view along the line X-X in FIG. 1. As shown in FIG. 1 and FIG. 2, the extruder 1 of the present embodiment serves to extrude, as a preformed product, a plastic material G that contains rubber. The extruder 1 preferably includes a barrel 2 having a substantially cylindrical shape, and a screw 3 accommodated in the barrel 2.

The barrel 2 of the present embodiment has, at one end side S1 thereof, a material feeding port 4 for supplying the material G into the barrel 2. Such a barrel 2 serves: to allow the material G in a band shape to be supplied from the material feeding port 4; and to allow the material G to be extruded by the screw 3 to the other end side S2 of the barrel 2.

The screw 3 serves to extrude the material G supplied from the material feeding port 4 into the barrel 2, to the other end side S2 of the barrel 2. The screw 3 is rotated by a drive device (not shown) provided outside the barrel 2 at the one end side S1, for example. The screw 3 of the present embodiment includes: a shaft body 5 which serves as the rotation center; and flights 6 which protrude from the shaft body 5 toward the radially outside of the screw 3.

The shaft body 5 of the present embodiment is linearly provided along the longitudinal direction of the barrel 2. Preferably, the shaft body 5 has a substantially constant diameter D, at least in the vicinity of the material feeding port 4. Such a shaft body 5 can reliably transmit the rotating force from the drive device (not shown).

The flights 6 are formed so as to be continuous in the circumferential direction while being shifted in the axial direction of the screw 3, for example. Preferably, the flights 6 form a substantially constant flight width C in the axial direction of the screw 3, at least in the vicinity of the material feeding port 4. Here, the flight width C is the distance between a pair of flights 6 adjacent to each other, at the same position in the circumferential direction of the shaft body 5. Such flights 6 allow extrusion molding to be continuously performed without interruption of the material G extruded from the extruder 1.

Next, a method for supplying a material to the extruder 1 according to the present embodiment is described. The method for supplying a material to the extruder 1 according to the present embodiment is a method for supplying the material G to the material feeding port 4 of the extruder 1 provided with the screw 3 which extrudes the plastic material G that contains rubber. The method for supplying a material according to the present embodiment includes a step of supplying the material G, shaped into a band having a width A, to the material feeding port 4.

The width A of the material G is preferably 50% to 150% of the flight width C of the screw 3. When the width A of the material G is less than 50% of the flight width C, the supply amount of the material G becomes insufficient, and material break and the like could occur in the preformed product that is extruded. When the width A of the material G is greater than 150% of the flight width C, the material G interferes with the flights 6 and is not smoothly loaded into the screw 3, and flowing-back (hereinafter, referred to as "backflow") of the material G from the material feeding port 4 could occur.

In the method for supplying a material to the extruder 1 according to the present embodiment, the ratio between the width A of the material G and the flight width C is specified although a focus has not been placed on the ratio, and thus, it is possible to cause the material G to be smoothly loaded into the screw 3 and it is possible to allow appropriate (i.e., neither excessive nor insufficient) warming of the material G to be performed. Therefore, the method for supplying a material according to the present embodiment allows stable extrusion molding of the material G to be performed.

The width A of the material G is more preferably 90% to 110% of the flight width C. In such a material G, the width A of the material G and the flight width C are closely similar to each other, and thus, an appropriate amount of accumulated rubber (hereinafter, referred to as "bank") G1 can be formed in the material feeding port 4. The bank G1 in an appropriate amount allows warming of the material G to be started when the material G is loaded into the screw 3. Accordingly, the method for supplying a material according to the present embodiment allows more stable extrusion molding of the material G to be performed.

A thickness B of the material G is not less than 50% of a net flight depth E of the screw 3. Here, the net flight depth E of the screw 3 is the shortest distance between the outer peripheral surface of the shaft body 5 of the screw 3 and the inner peripheral surface of the barrel 2. When the thickness B of the material G is less than 50% of the net flight depth E, the supply amount of the material G becomes insufficient, and material break and the like could occur in the preformed product that is extruded.

The thickness B of the material G is preferably not greater than 120% of the net depth E of the flight 6. When the thickness B of the material G is greater than 120% of the net depth E of the flight 6, the material G cannot be smoothly loaded into the screw 3, and a backflow could occur.

The cross-sectional area of the material G is preferably 90% to 110% of a net flight cross-sectional area F of the screw 3. Here, the net flight cross-sectional area F of the screw 3 is the area determined by a pair of flights 6 adjacent to each other, the outer peripheral surface of the shaft body 5, and the inner peripheral surface of the barrel 2, at the same position in the circumferential direction of the shaft body 5. In such a material G, the cross-sectional area of the material G and the net flight cross-sectional area F are closely similar to each other, and thus, the material G can be more smoothly loaded into the screw 3. Accordingly, the method for supplying a material according to the present embodiment allows more stable extrusion molding of the material G to be performed.

The material G has a rectangular cross-section. Such a material G allows easy management of the width A, the thickness B, and the cross-sectional area thereof.

The material G of the present embodiment has a Mooney viscosity ML1+4 (100°C) of not less than 90. Here, the Mooney viscosity ML1+4 (100°C) is a value measured in accordance with JISK6300-1. Such a material G has a small rolling resistance when molded into a tire, for example, and is appropriate for realizing low fuel consumption of the tire.

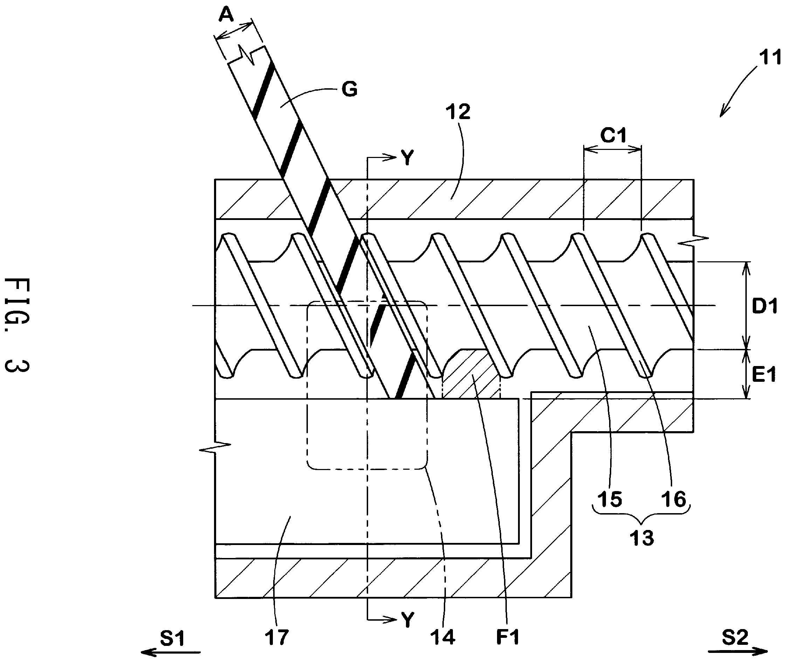

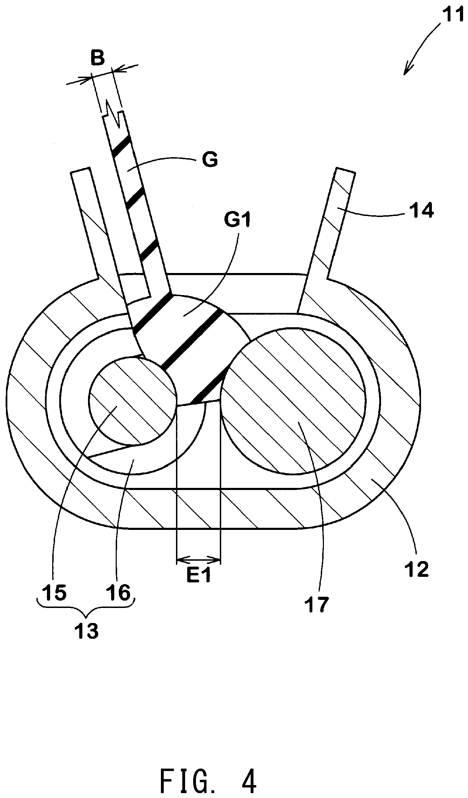

FIG. 3 is a partial cross-sectional view showing an extruder 11 of another embodiment. FIG. 4 is a cross-sectional view along the line Y-Y in FIG. 3. As shown in FIG. 3 and FIG. 4, the extruder 11 of the present embodiment serves to extrude the plastic material G that contains rubber. Preferably, the extruder 11 includes: a barrel 12; a screw 13 accommodated in the barrel 12; and a feed roll 17 accommodated in the barrel 12 so as to be adjacent to the screw 13.

The barrel 12 of the present embodiment has a material feeding port 14 for supplying the material G into the barrel 12. The barrel 12 has a shape that allows the screw 13 and the feed roll 17 to be accommodated in the vicinity of the material feeding port 14, for example. Preferably, the barrel 12 has, in the portion in which the feed roll 17 is not accommodated, a substantially cylindrical shape. Such a barrel 12 serves: to allow the material G in a band shape to be supplied from the material feeding port 14; and to allow the material G to be extruded by the screw 13.

Similar to the screw 3 of the embodiment described above, the screw 13 preferably includes: a shaft body 15 which serves as the rotation center; and flights 16 which protrude from the shaft body 15 toward the radially outside of the screw 13.

The shaft body 15 of the present embodiment is linearly provided along the longitudinal direction of the barrel 12. Preferably, the shaft body 15 has a substantially constant diameter D1, at least in the vicinity of the material feeding port 14. Such a shaft body 15 can reliably transmit the rotating force from a drive device (not shown) provided outside the barrel 12 at the one end side S1.

Preferably, the flights 16 form a substantially constant flight width C1 in the axial direction of the screw 13, at least in the vicinity of the material feeding port 14. Such flights 16 allow extrusion molding to be continuously performed without interruption of the material G extruded from the extruder 11.

The feed roll 17 is formed in a substantially columnar shape, for example. Preferably, the feed roll 17 and the screw 13 are provided such that the respective rotation axes are substantially parallel to each other. In the present embodiment, the shortest distance between the outer peripheral surface of the shaft body 15 of the screw 13 and the outer peripheral surface of the feed roll 17 is a net flight depth E1 of the screw 13.

A net flight cross-sectional area F1 of the screw 13 of the present embodiment is the area determined by a pair of flights 16 adjacent to each other, the outer peripheral surface of the shaft body 15, and the outer peripheral surface of the feed roll 17, in the plane that includes the rotation axis of the screw 13 and the rotation axis of the feed roll 17.

Next, a method for supplying a material to the extruder 11 according to the present embodiment is described. Similar to the embodiment described above, the method for supplying a material to the extruder 11 according to the present embodiment includes a step of supplying the material G, shaped into a band having a width A, to the material feeding port 14. The width A of the material G is preferably 50% to 150% of the flight width C1 of the screw 13, and more preferably 90% to 110% of the flight width C1.

Such a method for supplying a material to the extruder 11 allows the material G to be smoothly loaded into the screw 13, and allows appropriate (i.e., neither excessive nor insufficient) warming of the material G to be performed. Therefore, the method for supplying a material according to the present embodiment allows stable extrusion molding of the material G to be performed.

The thickness B of the material G is preferably 50% to 120% of the net flight depth E1 of the screw 13, and more preferably 105% to 120% of the net flight depth E1. With such a material G, a bank G1 in an appropriate amount is formed between the screw 13 and the feed roll 17, and thus, warming of the material G can be started when the material G is loaded into the screw 13.

The cross-sectional area of the material G is preferably 90% to 110% of the net flight cross-sectional area F1 of the screw 13. In such a material G, the cross-sectional area of the material G and the net flight cross-sectional area F1 are closely similar to each other, and thus, the material G can be smoothly loaded into the screw 13. Accordingly, the method for supplying a material according to the present embodiment allows more stable extrusion molding of the material G to be performed.

### [Example]

Using the extruder shown in FIG. 3 and FIG. 4, extrusion molding was performed by use of the materials having the cross-sectional shapes shown in Table 1. The presence/absence of occurrence of a backflow due to poor loading during the extrusion molding, and the presence/absence of material break of the preformed product that was extruded were tested. The temperature immediately after the discharge of the preformed product was measured.

The common specifications of the materials and the extruder, and the test methods are as follows.
Mooney viscosity ML1+4 (100°C) of material: 117
Type of extruder: single-layer extruder
Controlled temperature of extruder: 80°C
Rotational speed of extruder: 10 rpm

### <Backflow>

Occurrence of, at the material feeding port, backflow due to poor loading of the material into the screw was checked by visual observation. The result is shown as the presence/absence of the occurrence. Absence of backflow means that loading of the material into the screw was smooth.

### <Material break>

Occurrence of material break of the preformed product having been extruded from the extruder was checked by visual observation. The result is shown as the presence/absence of the occurrence. Absence of material break means that stable extrusion molding was performed.

### <Temperature of preformed product>

The temperature of the preformed product having been extruded from the extruder was measured immediately after the extrusion. The result is shown as temperature, and a temperature that is close to 100°C means that appropriate (i.e., neither excessive nor insufficient) warming was performed.

Table 1 shows the result of the tests.

**[Table 1]**

| | Comparative Example 1 | Example 1 | Example 2 |
|---|---|---|---|
| Width A of material/flight width C1 (%) | 200 | 100 | 100 |
| Thickness B of material/net flight depth E1 (%) | 60 | 100 | 120 |
| Occurrence of backflow | present | absent | absent |
| Material break of preformed product | present | absent | absent |
| Temperature of preformed product (°C) | 81 | 93 | 98 |

As a result of the tests, it was confirmed that, in the material of the Comparative example, backflow and material break occurred, whereas in the materials of the Examples, neither backflow nor material break occurred. It was also confirmed that, for the materials of the Examples, the temperature of the preformed product was closer to 100°C than that of the material of the Comparative example, and thus, appropriate (i.e., neither excessive nor insufficient) warming was performed. Therefore, it was confirmed that the materials of the Examples allow more stable extrusion molding of the materials to be performed than the material of the Comparative example.

## Claims

1. A method for supplying a plastic material (G) that contains rubber, to a material feeding port (4, 14) of an extruder (1, 11) provided with a screw (3, 13) which extrudes the material (G), the method comprising
supplying the material (G), shaped into a band having a width A, to the material feeding port (4, 14) wherein
the width A of the material (G) is 50% to 150% of a flight width (C, C1) of the screw (3, 13), **characterized in that**
the material (G) has a rectangular cross-section, and
a thickness B of the material (G) is not less than 50% of a net flight depth (E, E1) of the screw (3, 13).

2. The method for supplying the material (G) to the extruder (1, 11) according to claim 1, wherein
the width A of the material (G) is 90% to 110% of the flight width (C, C1).

3. The method for supplying the material (G) to the extruder (1, 11) according to claim 1, wherein
the thickness B of the material (G) is not greater than 120% of the net flight depth (E, E1).

4. The method for supplying the material (G) to the extruder (1, 11) according to any one of claims 1 to 3, wherein
a cross-sectional area of the material (G) is 90% to 110% of a net flight cross-sectional area (F, F1) of the screw (3, 13).

5. The method for supplying the material (G) to the extruder (1, 11) according to any one of claims 1 to 4, wherein
the material (G) has a Mooney viscosity ML1+4 (100°C) of not less than 90, wherein the Mooney viscosity ML1+4 (100°C) is a value measured in accordance with JISK6300-1.

## Patentansprüche

1. Verfahren zum Zuführen eines Kunststoffmaterials (G), das Kautschuk enthält, zu einer Materialzuführungsöffnung (4, 14) eines Extruders (1, 11), der mit einer Schnecke (3, 13) versehen ist, die das Material (G) extrudiert, wobei das Verfahren umfasst
Zuführen des Materials (G), das zu einem Band mit einer Breite A geformt ist, zu der Materialzuführungsöffnung (4, 14); wobei
die Breite A des Materials (G) 50% bis 150% einer Gangbreite (C, C1) der Schnecke (3, 13) beträgt, **dadurch gekennzeichnet, dass**
das Material (G) einen rechteckigen Querschnitt aufweist und
eine Dicke B des Materials (G) nicht weniger als 50 % einer Netto-Gangtiefe (E, E1) der Schnecke (3, 13) beträgt.

2. Verfahren zum Zuführen des Materials (G) zu dem Extruder (1, 11) nach Anspruch 1, wobei die Breite A des Materials (G) 90 % bis 110 % der Gangbreite (C, C1) beträgt.

3. Verfahren zum Zuführen des Materials (G) zu dem Extruder (1, 11) nach Anspruch 1, wobei die Dicke B des Materials (G) nicht mehr als 120 % der Netto-Gangtiefe (E, E1) beträgt.

4. Verfahren zum Zuführen des Materials (G) zu dem Extruder (1, 11) nach einem der Ansprüche 1 bis 3, wobei eine Querschnittsfläche des Materials (G) 90 % bis 110 % einer Netto-Gangquerschnittsfläche (F, F1) der Schnecke (3, 13) beträgt.

5. Verfahren zum Zuführen des Materials (G) zu dem Extruder (1, 11) nach einem der Ansprüche 1 bis 4, wobei das Material (G) eine Mooney-Viskosität ML1+4 (100°C) von nicht weniger als 90 aufweist, wobei die Mooney-Viskosität ML1+4 (100°C) ein gemäß JISK6300-1 gemessener Wert ist.

## Revendications

1. Procédé de fourniture d'un matériau en plastique (G) qui contient du caoutchouc, à un orifice d'alimentation de matériau (4, 14) d'une extrudeuse (1, 11) munie d'une vis (3, 13) qui extrude le matériau (G), le procédé comprenant
la fourniture du matériau (G), formé en une bande ayant une largeur A, à la porte d'alimentation de matériau (4, 14) la largeur A du matériau (G) étant de 50 % à 150 % d'une largeur de vol (C, C1) de la vis (3, 13), **caractérisé en ce que** le matériau (G) a une section transversale rectangulaire et
une épaisseur B du matériau (G) est de pas moins de 50 % d'une profondeur de vol nette (E, E1) de la vis (3,13).

2. Procédé de fourniture du matériau (G) à l'extrudeuse (1, 11) selon la revendication 1, dans lequel
la largeur A du matériau (G) est de 90 % à 110 % de la largeur de vol (C, C1).

3. Procédé de fourniture du matériau (G) à l'extrudeuse (1, 11) selon la revendication 1, dans lequel
l'épaisseur B du matériau( G) est de pas plus de 120 % de la profondeur de vol nette (E, E1).

4. Procédé de fourniture du matériau (G) à l'extrudeuse (1, 11) selon l'une quelconque des revendications 1 à 3, dans lequel
une surface de section transversale du matériau (G) est de 90 % à 110 % d'une surface de section transversale de vol nette (E, E1) de la vis (3, 13).

5. Procédé de fourniture du matériau (G) à l'extrudeuse (1, 11) selon l'une quelconque des revendication 1 à 4, dans lequel
le matériau (G) a une viscosité de Mooney ML1+4 (100 °C) de pas moins de 90, la viscosité de Mooney ML1+4 (100 °C) étant une valeur mesurée selon la norme JISK6300-1.
